# EUROPÄISCHE PATENTSCHRIFT

(11) **EP 1 452 367 B1**
(45) Veröffentlichungstag und Bekanntmachung des Hinweises auf die Patenterteilung: **09.06.2010**
(21) Anmeldenummer: 03027660.4
(22) Anmeldetag: 03.12.2003
(51) Int. Cl.: B60J 7/10, B60J 7/19, B60J 7/185

(54) **Verschlussvorrichtung für ein abnehmbares Kfz-Dach**
Locking arrangement for a detachable vehicle roof
Dispositif de verrouillage pour un toit amovible de véhicule

(30) Priorität: 28.02.2003 DE 10308769
(43) Veröffentlichungstag der Anmeldung: 01.09.2004
(73) Patentinhaber: Dr. Ing. h.c. F. Porsche AG, 70435 Stuttgart (DE)
(72) Erfinder: Scholz, Andre, 75446 Wiernsheim (DE); Armbruster, Reiner, 75417 Mühlacker (DE); Braun, Wolfgang, 73061 Ebersbach (DE)

(56) Entgegenhaltungen:
- DE-A1- 1 911 379
- DE-U1- 9 406 435
- FR-A- 2 629 543
- GB-A- 2 157 360
- GB-A- 2 249 762
- US-A- 4 653 968
- US-A- 6 088 878
- US-A1- 2002 003 993

## Beschreibung

Die Erfindung bezieht sich auf ein abnehmbares Dach für ein Kraftfahrzeug, insbesondere einen Personenkraftwagen nach dem Oberbegriff des Patentanspruchs 1.

Aus der DE 94 06 435 U1 geht ein derartiges abnehmbares Dach für ein Kraftfahrzeug hervor, das zwischen festen Aufbaustrukturen, einem Windschutzscheibenrahmen und einem Rollbügel, einsetzbar ist. Dieses Dach wird durch zwei formsteife Dachteile gebildet, die in einer Mittellängsebene des Kraftfahrzeugs zusammengesetzt sind. Beide Dachteile sind unter Vermittlung von jeweils einer Verschlusseinrichtung am Windschutzscheibenrahmen und am Rollbügel in Lage gehalten. Eine umlaufende Dichtung bildet eine Abstützeinrichtung für das Dach.

Aus der DE 1 911 379 A ist ein abnehmbares Dach bekannt, das eine Verschlusseinrichtung mit einem Verschlussorgan und einem Aufnahmebolzen aufweist. Der Aufnahmebolzen ist über ein elastisches Glied an dem Dach gehalten. Ein weiteres elastisches Glied stützt das Dach gegenüber dem Rollbügel ab.

Ein bekanntes abnehmbares Dach, DE 41 37 344 A1, ist aus formsteifem Werkstoff hergestellt und überwölbt einen Fahrgastraum zwischen einem Windschutzscheibenrahmen und einem Rollbügel, der den Fahrgastraum quer zur Fahrzeuglängsrichtung umgibt. Benachbart dem Windschutzscheibenrahmen ist eine Halteeinrichtung wirksam und hintergreift mit einem ersten Hakenteil des Dachs ein zweites Hakenteil am Windschutzscheibenrahmen. Dagegen ist am Dach, wo es an den Rollbügel angrenzt, eine Verschlusseinrichtung angebracht ist, die mit einer Klinke des Dachs in einen Haken des Rollbügels eingreift.

In der DE 34 13 379 wird eine Verriegelungsvorrichtung für ein Klappverdeck eines Personenkraftwagens behandelt, die ein kurbelartiges Verriegelungsorgan am Faltverdeck und eine Art Kulissenführung an einem Windschutzscheibenrahmen umfasst.

Das Verriegelungsorgan ist um eine in Fahrzeuglängsrichtung verlaufende Achse verschwenkbar, und die Kulissenführung ist quer zur Fahrzeuglängsrichtung ausgerichtet.

Es ist Aufgabe der Erfindung ein abnehmbares Dach mit zwei Dachelementen für einen Personenkraftwagen zu schaffen, das unter Zwischenschaltung von wenigstens einer Verschlusseinrichtung einfach, funktionsgerecht und sicher an einem Aufbau des Personenkraftwagens in Lage gehalten ist.

Erfindungsgemäß wird dies Aufgabe durch die Merkmale des Patentanspruchs 1 gelöst. Weitere, die Erfindung ausgestaltende Merkmale sind in den Unteransprüchen enthalten.

Die mit der Erfindung erzielten Vorteile sind darin zu sehen, dass jedes Dachelement mit einer Verschlusseinrichtung versehen ist und demzufolge die Handhabung, d.h. das Lösen und das Aufsetzen des Dachelements nur mit einer Verschlusseinrichtung möglich ist. Damit eine Verschlusseinrichtung eingesetzt werden kann, die ein kurbelartiges Verschlussorgan und eine Kulissenführung umfasst, wirkt jedes Dachelement mit einer Abstützeinrichtung zusammen, die Momenten entgegenwirkt, die beim Betätigen des Verschlussorgans an einer benachbart der Verschlusseinrichtung verlaufenden Begrenzungswand des Dachelements auftreten. Die Funktion der Abstützeinrichtung wird dabei dadurch unterstützt, dass in Fahrzeugquerrichtung beiderseits der Verschlusseinrichtung nach Art von Puffern ausgebildete Abstützelemente der besagten Abstützeinrichtung vorgesehen sind. Die Abstützelemente sind leicht herstellbar, da sie aus Kunststoff bestehen, und sie sind deshalb vorteilhaft ausgebildet, weil an den Dachelementen angeordnet. Schließlich sind die Halter der Abstützelemente problemlos umsetzbare Bauteile, und dank der Einstellbarkeit der Abstützelement lassen sich etwaige Fertigungstoleranzen definiert ausgleichen.

In der Zeichnung wird ein Ausführungsbeispiel der Erfindung gezeigt, das nachstehend näher beschrieben wird.

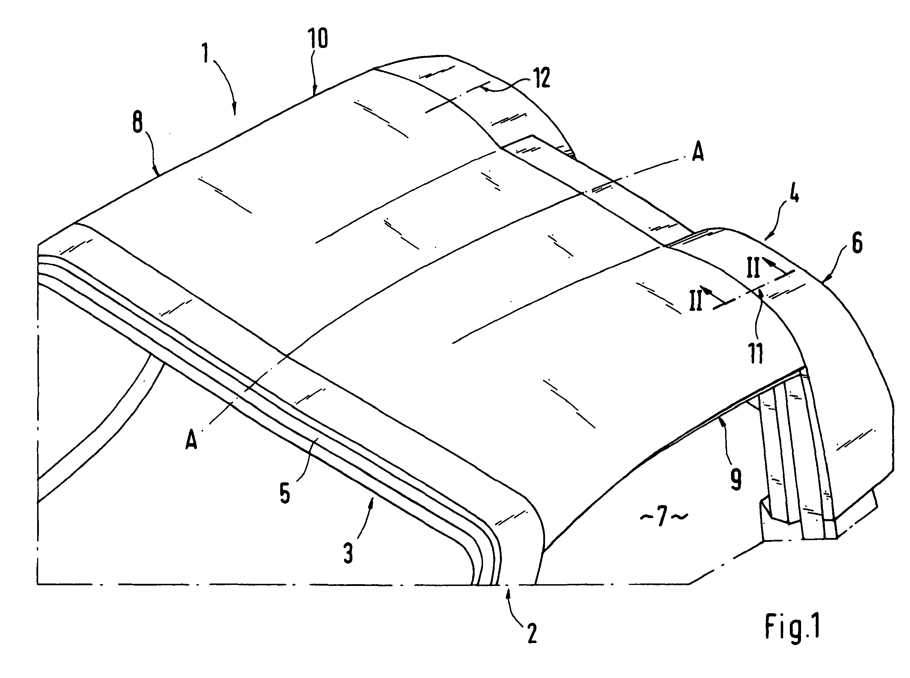

Es zeigen
- Fig. 1: eine Schrägansicht von vorne links oben auf einen Personenkraftwagen mit einem Dach nach der Erfindung,
- Fig. 2: einen Schnitt nach der Linie II-II der Fig.1,
- Fig. 3: einen Schnitt nach der Linie III-III der Fig. 2,

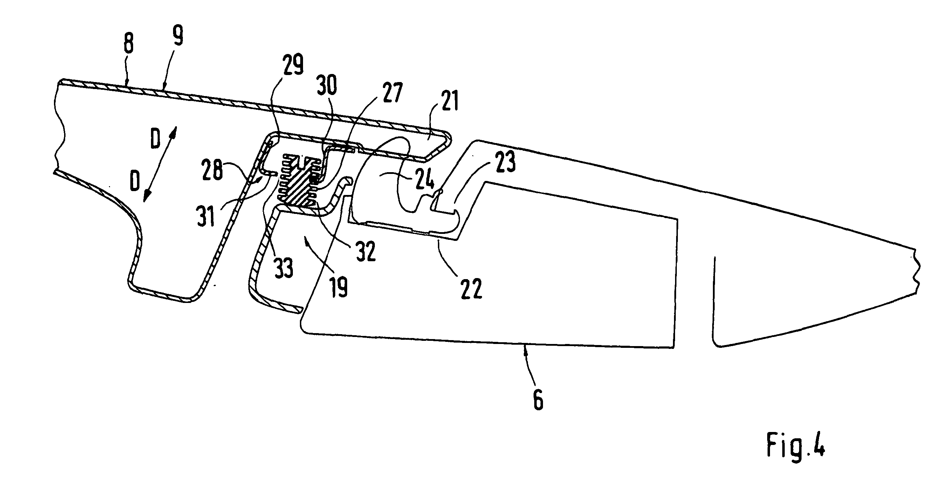

- Fig. 4: einen Schnitt nach der Linie lV-lV der Fig. 3.

Ein Personenkraftwagen 1 der Sportwagengattung - dynamisch anmutendes Styling und anspruchsvolle Motorleistung - umfasst einen Aufbau 2 mit festen Aufbaustrukturen 3 und 4; die Aufbaustruktur 3 ist ein Windschutzscheibenrahmen 5 und die Aufbaustruktur 4 ist eine Rollbügelvorrichtung 6. Ein Fahrgastraum 7 des Aufbaus 2 wird von einem abnehmbaren Dach 8 überwölbt, das sich zwischen dem Windschutzscheibenrahmen 5 und der Rollbügelvorrichtung 6 erstreckt. Das Dach 8 wird durch zwei bspw. aus hochfestem Werkstoff - Faserverstärktem Kunststoff - bestehende Dachelemente 9 und 10 gebildet, die in einer Mittellängsebene A-A des Personenkraftwagens zusammengesetzt sind und zumindest an der Rollbügelvorrichtung 6 unter Vermittlung von Verschlusseinrichtungen 11 und 12 in Lage gehalten werden.

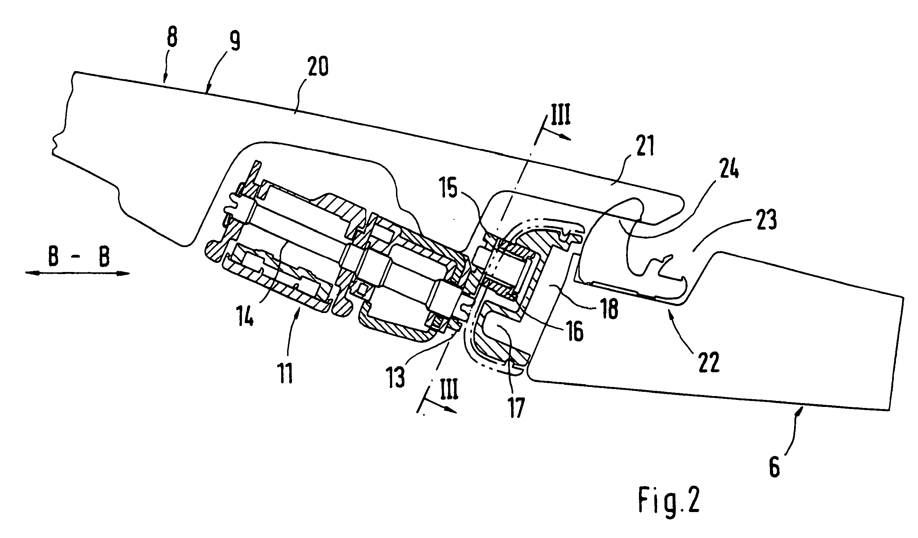

Jede Verschlusseinrichtung z.B. 11 besitzt ein am Dachelement 9 angebrachtes kurbelartiges Verschlussorgan 13, das um eine in Fahrzeuglängsrichtung B-B - Fig. 2 - ausgerichtete Lagerwelle 14 verschwenkbar ist und mit einem an einer Kurbel 15 angebrachten Schließzapfen 16 in eine Kulissenführung 17 einer Lagerplatte 18 an der Rollbügelvorrichtung 6 eingreift. Eine Verschlusseinrichtung dieser Art wird in der eingangs zitierten DE 34 13 379 eingehend beschrieben.

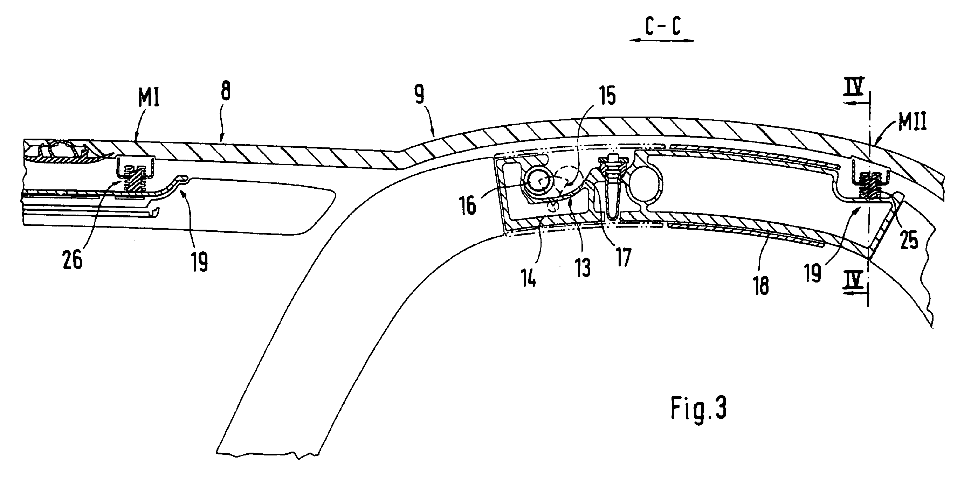

Das Dachelement 9 ist lediglich mit einer einzigen Verschlusseinrichtung 11 versehen, und es arbeitet mit einer Abstützeinrichtung 19 zusammen, die auf der Rollbügelvorrichtung 6 aufliegt und beim Betätigen - Öffnen und Schließen - der Verschlusseinrichtung 11 Momenten MI und MII - Fig. 3 - entgegenwirkt. Diesen Momenten Ml und Mll ist eine benachbart der Verschlusseinrichtung 11 verlaufende Begrenzungswand 20 bzw. ein flanschartiger Dachabschnitt 21 des Dachelements 9 ausgesetzt. Der Dachabschnitt 21 überragt einen Rollbügelabschnitt 22 mit einer Rinne 23 der Rollbügelvorrichtung 6. In der Rinne 23 ruht ein Dichtkörper 24, auf dem der Dachabschnitt 21 aufliegt. In Fahrzeugquerrichtung C-C sind beiderseits der Verschlusseinrichtung 11 bzw. des Schließzapfens 16 Abstützelemente 25 und 26 der Abstützvorrichtung 19 vorgesehen, welche Abstützelemente 25 und 26 nach Art von Puffern ausgebildet und aus elastischem Werkstoff bspw. Kunststoff bestehen.

Obwohl es denkbar ist die Abstützelemente 25 und 26 an der Rollbügelvorrichtung 6 anzubringen sind besagte Abstützelemente im Ausführungsbeispiel am Dachelement 9 befestigt. Hierbei ist jedes in axialer Richtung D-D - Fig. 3 - einstellbare Abstützelement z.B. 25 ähnlich einem zylinderischem Bolzen 27 ausgeführt, wobei der Bolzen 27 an einem Halter 28 befestigt ist. Der Halter 28 weist einen etwa U-förmigen Querschnitt auf, dessen Schenkel 29 und 30 am Dachelement 9 z.B. durch Kleben befestigt sind. Zwischen den Schenkeln 29 und 30 verläuft ein Steg 31, der den Bolzen 26 trägt. Hierzu weist der Bolzen 27 an seiner Außenseite ein Gewinde 32 auf, über das der Bolzen 27 in eine Bohrung 33 im Steg 31 eingedreht ist.

## Patentansprüche

1. Abnehmbares Dach (8) für ein Kraftfahrzeug, insbesondere einen Personenkraftwagen, das einen Fahrgastraum (7) in einem Aufbau (2) des Personenkraftwagens (1) überwölbt und an festen Aufbaustrukturen (3, 4) des Aufbaus gehalten ist, wobei das mit wenigstens einer Verschlusseinrichtung (11, 12) versehene Dach (8) aus formsteifem Werkstoff besteht und zwei in einer Mittellängsebene des Personenkraftwagens zusammengesetzte Dachelemente (9, 10) umfasst, von denen jedes Dachelement (9, 10) eine Verschlusseinrichtung (11, 12) besitzt, **dadurch gekennzeichnet, dass** jedes Dachelement (9, 10) mit jeweils einer Abstützeinrichtung (19) zusammenarbeitet, welche an einer der festen Aufbaustrukturen (3 oder 4) aufliegende Abstützeinrichtung (19) beim Betätigen eines Verschlussorgans (13) der Verschlusseinrichtung (11 und 12) Momenten (Ml; MII) entgegenwirkt, denen eine benachbart der Verschlusseinrichtung (11 und 12) verlaufende Begrenzungswand (20) des Dachelements (9 und 10) ausgesetzt ist, und dass in Fahrzeugquerrichtung (C-C) beiderseits der Verschlusseinrichtung (11) Abstützelemente (25 und 26) der Abstützeinrichtung (19) vorgesehen sind.

2. Abnehmbares Dach nach Anspruch 1, **dadurch gekennzeichnet, dass** die Abstützelemente (25 und 26) nach Art von Puffern ausgebildet sind.

3. Abnehmbares Dach nach Anspruch 2, **dadurch gekennzeichnet, dass** die Abstützelemente (25 und 26) aus elastischem Werkstoff bspw. Kunststoff bestehen.

4. Abnehmbares Dach nach einem oder mehreren der vorangehenden Ansprüche, **dadurch gekennzeichnet, dass** die Abstützelemente (25 und 26) der Abstützeinrichtung (19) am Dachelement (9 und 10) gehalten sind.

5. Abnehmbares Dach nach Anspruch 4, **dadurch gekennzeichnet, dass** jedes Abstützelement (25 und 26) nach Art eines Bolzens (27) ausgeführt und an einem Halter (28) des Dachelements (9 und 10) befestigt ist.

6. Abnehmbares Dach nach Anspruch 5, **dadurch gekennzeichnet, dass** der Halter (28) des Bolzens (27) einen U-förmigen Querschnitt aufweist, dessen Schenkel (29 und 30) am Dachelement (9 und 10) gehalten sind.

7. Abnehmbares Dach nach Anspruch 6, **dadurch gekennzeichnet, dass** ein Steg (31) des U-förmigen Querschnitts des Halters (28) den Bolzen (27) aufnimmt.

8. Abnehmbares Dach nach den Ansprüchen 5 und 7, **dadurch gekennzeichnet, dass** der Bolzen (27) in axialer Richtung (D-D) einstellbar ausgeführt ist.

9. Abnehmbares Dach nach den Ansprüchen 7 und 8, **dadurch gekennzeichnet, dass** der Bolzen (27) an seiner Außenseite eine Art Gewinde (32) umfasst, über das besagter Bolzen (27) in eine Bohrung (33) im Steg (31) des U-förmigen Querschnitts eingedreht ist.

## Claims

1. Detachable roof (8) for a motor vehicle, in particular a passenger vehicle, said roof arching over a passenger compartment (7) in a body (2) of the passenger vehicle (1) and being held on fixed body structures (3, 4) of the body, wherein the roof (8) which is provided with at least one locking device (11, 12) is composed of dimensionally rigid material and comprises two roof elements (9, 10) which are fitted together in a centre longitudinal plane of the passenger vehicle and of which each roof element (9, 10) has a locking device (11, 12), **characterized in that** each roof element (9, 10) cooperates with a respective supporting device (19), which supporting device (19), resting on one of the fixed body structures (3 or 4), when a locking member (13) of the locking device (11 and 12) is actuated, opposes moments (MI; MII) to which a boundary wall (20) of the roof element (9 and 10), said boundary wall running adjacent to the locking device (11 and 12), is exposed, and **in that** supporting elements (25 and 26) of the supporting device (19) are provided on both sides of the locking device (11) in the transverse direction (C-C) of the vehicle.

2. Detachable roof according to Claim 1, **characterized in that** the supporting elements (25 and 26) are designed in the manner of buffers.

3. Detachable roof according to Claim 2, **characterized in that** the supporting elements (25 and 26) are composed of an elastic material, for example plastic.

4. Detachable roof according to one or more of the preceding claims, **characterized in that** the supporting elements (25 and 26) of the supporting device (19) are held on the roof element (9 and 10).

5. Detachable roof according to Claim 4, **characterized in that** each supporting element (25 and 26) is designed in the manner of a bolt (27) and is fastened to a holder (28) of the roof element (9 and 10).

6. Detachable roof according to Claim 5, **characterized in that** the holder (28) of the bolt (27) has a U-shaped cross section, the limbs (29 and 30) of which are held on the roof element (9 and 10).

7. Detachable roof according to Claim 6, **characterized in that** a web (31) of the U-shaped cross section of the holder (28) receives the bolt (27).

8. Detachable roof according to Claims 5 and 7, **characterized in that** the bolt (27) is designed to be adjustable in the axial direction (D-D).

9. Detachable roof according to Claims 7 and 8, **characterized in that** the outside of the bolt (27) comprises a type of thread (32) via which said bolt (27) is screwed into a hole (33) in the web (31) of the U-shaped cross section.

## Revendications

1. Toit amovible (8) pour un véhicule automobile, notamment un véhicule de tourisme, qui est cintré au-dessus de l'habitacle de conduite (7) dans une carrosserie (2) du véhicule automobile (1) et qui est maintenu su des structures fixes (3, 4) de la carrosserie, le toit (8) pourvu d'au moins un dispositif de fermeture (11, 12) se composant d'un matériau de forme rigide et comprenant deux éléments de toit (9, 10) assemblés dans un plan longitudinal médian du véhicule automobile, chaque élément de toit (9, 10) possédant un dispositif de fermeture (11, 12), **caractérisé en ce que** chaque élément de toit (9, 10) coopère avec un dispositif de support respectif (19), lequel dispositif de support (19) reposant sur l'une des structures de carrosserie fixes (3 ou 4), lors de l'actionnement d'un organe de fermeture (13) du dispositif de fermeture (11 et 12), agit à l'encontre de couples (MI ; MII) auxquels est exposée une paroi de limitation (20) de l'élément de toit (9 et 10) s'étendant à côté du dispositif de fermeture (11 et 12), et **en ce que** des éléments de support (25 et 26) du dispositif de support (19) sont prévus dans la direction transversale du véhicule (C-C) de chaque côté du dispositif de fermeture (11).

2. Toit amovible selon la revendication 1, **caractérisé en ce que** les éléments de support (25 et 26) sont réalisés à la manière de tampons.

3. Toit amovible selon la revendication 2, **caractérisé en ce que** les éléments de support (25 et 26) se composent d'un matériau élastique, par exemple de plastique.

4. Toit amovible selon l'une quelconque ou plusieurs des revendications précédentes, **caractérisé en ce que** les éléments de support (25 et 26) du dispositif de support (19) sont maintenus sur l'élément de toit (9 et 10).

5. Toit amovible selon la revendication 4, **caractérisé en ce que** chaque élément de support (25 et 26) est réalisé à la manière d'un boulon (27) et est fixé sur un organe de fixation (28) de l'élément de toit (9 et 10).

6. Toit amovible selon la revendication 5, **caractérisé en ce que** l'organe de fixation (28) du boulon (27) présente une section transversale en forme de U, dont les branches (29 et 30) sont maintenues sur l'élément de toit (9 et 10).

7. Toit amovible selon la revendication 6, **caractérisé en ce qu'**une âme (31) de la section transversale en forme de U de l'organe de fixation (28) reçoit le boulon (27).

8. Toit amovible selon les revendications 5 et 7, **caractérisé en ce que** le boulon (27) est réalisé de manière ajustable dans la direction axiale (D-D).

9. Toit amovible selon les revendications 7 et 8, **caractérisé en ce que** le boulon (27) comprend sur son côté extérieur une espèce de filetage (32), par le biais duquel ledit boulon (27) est vissé dans un alésage (33) dans l'âme (31) de la section transversale en forme de U.
